# EUROPEAN PATENT SPECIFICATION

(11) **EP 3 413 330 B1**
(45) Date of publication and mention of the grant of the patent: **17.06.2020**
(21) Application number: 16889311.3
(22) Date of filing: 05.02.2016
(51) Int. Cl.: H01H 33/59, H02H 7/26

(54) **DIRECT CURRENT CIRCUIT BREAKER**
GLEICHSTROMSCHUTZSCHALTER
DISJONCTEUR À COURANT CONTINU

(43) Date of publication of application: 12.12.2018
(73) Proprietor: Mitsubishi Electric Corporation, Chiyoda-ku Tokyo 100-8310 (JP)
(72) Inventor: TAHATA, Kazuyori, Tokyo 100-8310 (JP); KIKUCHI, Kunio, Tokyo 100-8310 (JP); MIYASHITA, Makoto, Tokyo 100-8310 (JP); KAMEI, Kenji, Tokyo 100-8310 (JP); TOKOYODA, Sho, Tokyo 100-8310 (JP)
(74) Representative: Zech, Stefan Markus
(86) International application number: PCT/JP2016/053543
(87) International publication number: WO 2017/134825

(56) References cited:
- EP-A1- 2 589 123
- WO-A1-2014/132396
- JP-A- 2002 093 294
- JP-U- S60 162 338
- JP-U- S60 162 338

## Description

### Field

The present invention relates to a direct current circuit breaker that interrupts a DC current.

### Background

Self-commutated direct current power transmission systems that employ a self-commutated converter have come into widespread use worldwide. This is because such power transmission systems have the advantage that they can be connected to a weak power system and used in locations where there is no alternating current power supply. It is essential for a multi-terminal self-commutated direct current power transmission system that connects three or more locations to employ a direct current circuit breaker in order to select and disconnect a faulty line.

One type of direct current circuit breaker is a forced arc-extinguishing direct current circuit breaker.

In this type of circuit breaker, a resonant circuit including a capacitor and a reactor is connected in parallel with an interruption unit. When there is a need to interrupt the DC current, an electric charge stored in the capacitor that has been charged in advance is discharged, and thereby a resonant current made by the capacitor and the reactor is superimposed on the DC current so as to form a current zero point (see Patent Literature 1). Another type of direct current circuit breaker is a self-excited vibration direct current circuit breaker. In this type of circuit breaker, a resonant circuit that includes a capacitor and a reactor is connected in parallel with an interruption unit, and the self-excited oscillation phenomenon due to the interaction between arcs and the resonant circuit creates the zero point (see Patent Literature 2).

Another type of direct current circuit breaker has been proposed in which many Insulated Gate Bipolar Transistors (IGBTs) that have a self-arc-extinguishing capability are connected in series-parallel combination in order to interrupt a DC current (see Patent Literature 3).

JP 2002 093294 A discloses a DC circuit breaker with two vacuum circuit breakers in series, the main vacuum breaker has a current limiting element in parallel.

WO 2012/001123 A1 discloses circuit breakers in a DC grid. The circuits are different but the document relates to the problem of avoiding collapse of all lines in the system due to a fault condition in one line.

JP S60 162338 U discloses a parallel connection of a vacuum switch and a current limiter in series with a gas insulated switch constituting an AC breaker.

### Citation List

### Patent Literatures

Patent Literature 1: Japanese Patent Application Laid-open No. 2004-171849
Patent Literature 2: Japanese Patent Application Laid-open No. H9-50743
Patent Literature 3: Japanese Patent Application Laid-open No. 2015-79699

### Summary

### Technical Problem

With self-commutated direct current power transmission, even when a fault has occurred in one direct current line, the lines without faults are still required to continue operating. It is thus necessary to eliminate the fault before the DC voltage falls to or below a given threshold. However, the direct current circuit breakers described in Patent Literatures 1 and 2, i.e., direct current circuit breakers using a conventional gas circuit breaker as an interruption unit, are assumed to not operate at a high speed. Therefore, there is a problem in that it is difficult to interrupt a DC current before the DC voltage in the system falls to or below a threshold. In contrast to these circuit breakers, the direct current circuit breaker described in Patent Literature 3 is capable of operating at a high speed because this circuit breaker uses semiconductor elements in its interruption unit. However, in order to handle a high voltage, it is necessary to connect many semiconductor elements in a series-parallel combination. This results in a problem in that a cost increase is unavoidable.

The objective of the present invention, in view of the above problems, is to provide a direct current circuit breaker that is capable of preventing a decrease in the system voltage when a fault occurs while at the same time avoiding an increase in the device cost.

### Solution to Problem

In order to solve the above problems and achieve the objective, the present invention is a direct current circuit breaker used in a self-commutated direct current power transmission system which includes the features of appended claim 1.

### Advantageous Effects of Invention

According to the present invention, there is an effect where it is possible to realize a direct current circuit breaker that is capable of preventing a decrease in system voltage when a fault occurs while at the same time avoiding an increase in the device cost.

### Brief Description of Drawings

FIG. 1 is a diagram illustrating an example configuration of a direct current circuit breaker according to a first embodiment.
FIG. 2 is a diagram illustrating a waveform of a voltage on a direct current line of a direct current power transmission system using the direct current circuit breaker according to a first embodiment, and a waveform of a current flowing through the direct current line.
FIG. 3 is a diagram illustrating a waveform of a voltage on a direct current line of a direct current power transmission system using a direct current circuit breaker according to a second embodiment, and a waveform of a current flowing through the direct current line.
FIG. 4 is a diagram illustrating an example configuration of a direct current circuit breaker according to a third embodiment.
FIG. 5 is a diagram illustrating an example configuration of a direct current circuit breaker according to a fifth embodiment.

### Description of Embodiments

A direct current circuit breaker according to embodiments of the present invention will be described in detail below with reference to the accompanying drawings. The present invention is not limited to the embodiments.

### First embodiment

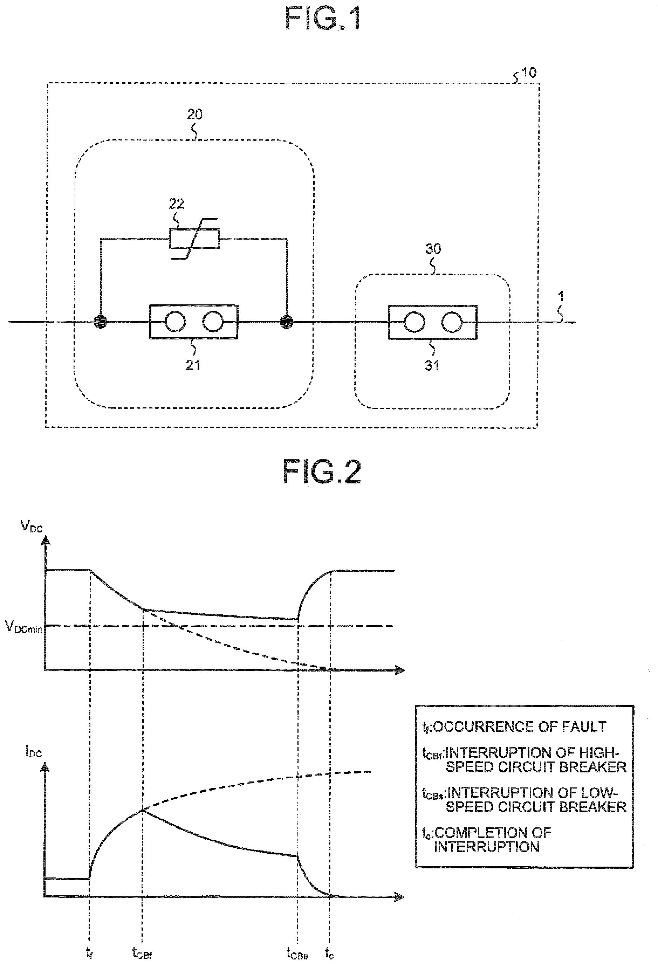

FIG. 1 is a diagram illustrating an example configuration of a direct current circuit breaker according to a first embodiment of the present invention. A direct current circuit breaker 10 according to the present embodiment includes a high-speed circuit breaker 20 and a low-speed circuit breaker 30, which are connected in series.

The high-speed circuit breaker 20 is inserted into a direct current line 1, and it includes a high-speed circuit breaker interruption unit 21 that functions as a DC-current flow path during steady operation and also includes a current limiting element 22 connected in parallel with the high-speed circuit breaker interruption unit 21. A lightning arrester corresponds to the current limiting element 22.

The low-speed circuit breaker 30 is inserted into the direct current line 1, and it includes a low-speed circuit breaker interruption unit 31 that functions as a DC-current flow path during normal operations.

When a fault occurs on the direct current line 1, i.e., when the current flowing through the direct current line 1 exceeds the specified value above which it is determined that a fault has occurred, then the high-speed circuit breaker interruption unit 21 of the high-speed circuit breaker 20 and the low-speed circuit breaker interruption unit 31 of the low-speed circuit breaker 30 perform an opening operation to open the direct current line 1 and interrupt the DC current that is a fault current. A determination of whether a current flowing through the direct current line 1 exceeds a specified value is performed by a control device (not illustrated) that monitors the current value detected by a current transformer (not illustrated) provided on the direct current line 1. The method for detecting the occurrence of a fault is merely an example. The occurrence of a fault can be detected by other methods, actual examples of which are detection on the basis of the amount of variation in DC current, which is the rate of variation in DC current, detection on the basis of the voltage on the direct current line 1, or the like. Upon detecting that the current flowing through the direct current line 1 exceeds a specified value, the control device instructs the high-speed circuit breaker interruption unit 21 and the low-speed circuit breaker interruption unit 31 to open. The control device can be configured to be provided outside the high-speed circuit breaker 20 and the low-speed circuit breaker 30. The control device can be also configured to be provided inside each of the high-speed circuit breaker 20 and the low-speed circuit breaker 30.

The interrupting speed of the high-speed circuit breaker interruption unit 21 is faster than the interrupting speed of the low-speed circuit breaker interruption unit 31. The interrupting speed refers to the time required to interrupt the DC current from the start of an opening operation.

In general, a high interrupting-speed circuit breaker costs more if it has a high breakdown voltage than a low interrupting-speed circuit breaker with the same breakdown voltage.

Next, the operation of the direct current circuit breaker 10 according to the present embodiment is described with reference to FIG. 2. FIG. 2 is a diagram illustrating a waveform of a voltage V_{DC} on the direct current line of the direct current power transmission system using the direct current circuit breaker 10, and a waveform of a current I_{DC} flowing through the direct current line. The upper section of FIG. 2 illustrates the voltage V_{DC}, and the lower section thereof illustrates the current I_{DC}. The voltage V_{DC} refers to a voltage on the direct current line 1 closer to the power supply relative to the direct current circuit breaker 10, i.e., a voltage on the direct current line 1 between the power supply and the direct current circuit breaker 10. The horizontal axis represents time and the vertical axis represents the voltage V_{DC} or the current I_{DC}. In FIG. 2, the solid line illustrates the waveform of the voltage V_{DC} or the waveform of the current I_{DC} in a case where the direct current circuit breaker 10 is used. The dotted line illustrates the waveform of the voltage V_{DC} or the waveform of the current I_{DC} in a case where the direct current circuit breaker 10 is not used. FIG. 2 illustrates the waveform when a fault occurs at time t_{f}.

When a fault occurs on the direct current line 1 at the time t_{f}, the DC voltage V_{DC} starts decreasing sharply, and simultaneously the DC current I_{DC} starts increasing sharply. Upon detecting the fault, the direct current circuit breaker 10 according to the first embodiment starts an interrupting operation of the high-speed circuit breaker 20 and the low-speed circuit breaker 30, i.e., it starts opening the high-speed circuit breaker interruption unit 21 and the low-speed circuit breaker interruption unit 31. After the direct current circuit breaker 10 has started opening the interruption units 21 and 31, then, first, the high-speed circuit breaker interruption unit 21 of the high-speed circuit breaker 20 completes interruption of a fault current at a time t_{CBf}. In the high-speed circuit breaker 20, the fault current shifts its flow direction to the current limiting element 22. This limits the fault current and can reduce the rate of decrease in the DC voltage V_{DC}. Thereafter, the low-speed circuit breaker interruption unit 31 of the low-speed circuit breaker 30 completes interruption of the fault current at a time T_{CBs} before the DC voltage V_{DC} reaches a minimum voltage threshold V_{DCmin}, which is the minimum voltage threshold needed for the system to continue the operation. Thus, the fault current sharply decreases. At a time t_{c}, the fault has been completely eliminated and the current I_{DC} therefore becomes zero. In the manner described above, after the high-speed circuit breaker 20 has completed the interruption, the low-speed circuit breaker 30 then interrupts the voltage applied to the direct current line 1.

As described above, the direct current circuit breaker according to the present embodiment is configured such that the high-speed circuit breaker 20 and the low-speed circuit breaker 30 are connected in series. The high-speed circuit breaker 20 operates at a faster interrupting speed but also has more difficulty in withstanding a higher voltage. The low-speed circuit breaker 30 can more easily withstand a higher voltage but operates at a slower interrupting speed. In the direct current circuit breaker according to the present embodiment, the high-speed circuit breaker 20 is not required to withstand an excessively high voltage. Further, in the low-speed circuit breaker 30, the operating time duty and the interrupting-current peak value are significantly reduced. That is, the operating duty of the high-speed circuit breaker 20 and of the low-speed circuit breaker 30 can be significantly reduced, and the total cost of constructing the direct current circuit breaker can be lowered. Furthermore, the requirement of the direct current power transmission system that a fault can be eliminated before the DC voltage V_{DC} becomes equal to or less than the minimum voltage threshold V_{DCmin} can be satisfied.

### Second embodiment

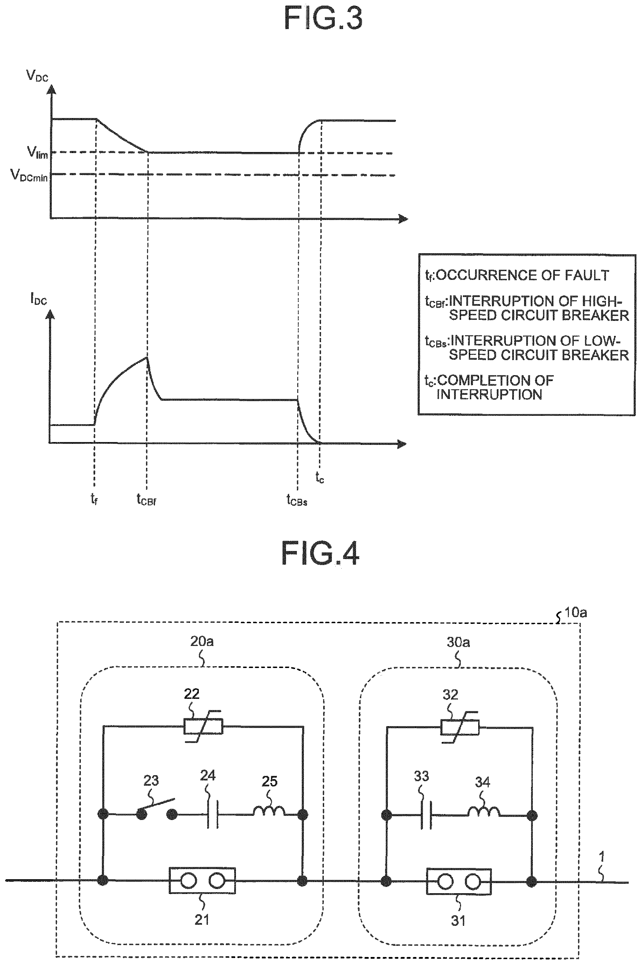

With reference to FIG. 3, a direct current circuit breaker according to a second embodiment is described below. FIG. 3 is a diagram illustrating a waveform of the voltage V_{DC} on a direct current line of the direct current power transmission system using a direct current circuit breaker according to the second embodiment and also illustrating a waveform of the current I_{DC} flowing through the direct current line. The configuration of the direct current circuit breaker according to the second embodiment is the same as the configuration according to the first embodiment. FIG. 3 is similar to FIG. 2 in that the upper section of FIG. 3 illustrates the voltage V_{DC} and the lower section of FIG. 3 illustrates the current I_{DC}. The horizontal axis represents time. In FIG. 3, Vₗᵢₘ is a voltage to be applied to the current limiting element 22 after the high-speed circuit breaker interruption unit 21 of the high-speed circuit breaker 20 has completed the interruption, i.e., the opening operation.

In the direct current circuit breaker 10 according to the second embodiment, the impedance of the current limiting element 22 is set in such a manner that the voltage Vₗᵢₘ to be applied to the current limiting element 22 becomes, after the high-speed circuit breaker 20 is disconnected, equal to or greater than the minimum voltage threshold V_{DCmin} needed for the system to continue the operation. The impedance of the current limiting element 22 is set in the manner as described above, and this therefore prevents, regardless of the time that has elapsed since the high-speed circuit breaker 20 was disconnected, the DC voltage V_{DC} from becoming equal to or less than the minimum voltage threshold V_{DCmin} for the system. In contrast, in the direct current circuit breaker 10 according to the first embodiment, because the impedance of the current limiting element 22 is not set in the above manner, there is a possibility that, depending on the set value of the impedance, the DC voltage V_{DC} can become equal to or less than the minimum voltage threshold V_{DCmin} as time elapses after the high-speed circuit breaker 20 has been disconnected. Consequently, the low-speed circuit breaker 30 needs to complete the interrupting operation before the DC voltage V_{DC} becomes equal to or less than the minimum voltage threshold V_{DCmin}.

As described above, in the direct current circuit breaker according to the second embodiment, the impedance of the current limiting element 22 in the high-speed circuit breaker 20 is set at such a value as to be capable of maintaining, after the high-speed circuit breaker interruption unit 21 is disconnected, the voltage V_{DC} on the direct current line 1 at the minimum voltage threshold V_{DCmin} needed for the system to continue the operation or greater. With this configuration, it is not necessary, with regard to the low-speed circuit breaker 30 in the direct current circuit breaker according to the second embodiment, to take into account the operating-time requirement from the decrease in the system voltage and the operating duty can be further reduced when compared to the first embodiment.

### Third embodiment

FIG. 4 is a diagram illustrating an example configuration of a direct current circuit breaker according to a third embodiment. In a direct current circuit breaker 10a according to the third embodiment, the high-speed circuit breaker 20 in the direct current circuit breaker 10 described in the first or second embodiment is replaced with a high-speed circuit breaker 20a that is a forced arc-extinguishing circuit breaker. Further, the low-speed circuit breaker 30 in the direct current circuit breaker 10 described in the first or second embodiment is replaced with a low-speed circuit breaker 30a that is a self-excited vibration circuit breaker. In FIG. 4, constituent elements common to those of the direct current circuit breaker 10 according to the first and second embodiments are denoted by the same reference signs.

A forced arc-extinguishing circuit breaker is a circuit breaker that discharges electric charge stored in a capacitor that has been charged in advance, thereby superimposing a resonant current made by the capacitor and a reactor on a DC current so as to form a current zero point. A self-excited vibration circuit breaker is a circuit breaker in which the self-excited oscillation phenomenon due to the interaction between arcs and the resonant circuit creates the zero point.

The high-speed circuit breaker 20a includes the high-speed circuit breaker interruption unit 21, the current limiting element 22, a high-speed switch 23, a capacitor 24, and a reactor 25.

In the high-speed circuit breaker 20a, a resonant circuit that generates a resonant current is configured from a series circuit, i.e., the high-speed switch 23, the capacitor 24, and the reactor 25 which are connected in series, and from the current limiting element 22, which is connected in parallel with this series circuit. The resonant circuit and the high-speed circuit breaker interruption unit 21 are connected in parallel. The capacitor 24 is kept constantly charged by a charging device (not illustrated) or by a DC voltage supplied from the direct current line 1. In the high-speed circuit breaker 20a, after the high-speed switch 23 is turned on, a current is discharged from the capacitor 24 and thereby a current zero point is formed within an extremely short time, i.e., in the order of several tens of microseconds. The high-speed circuit breaker 20a is capable of interrupting the current at a high speed. The high-speed switch 23 can be turned on at the same timing as the timing at which the high-speed circuit breaker interruption unit 21 starts an opening operation, or it can be turned on at a timing later than the timing at which the high-speed circuit breaker interruption unit 21 starts an opening operation, with the later timing taking into account the time required for the opening operation. In a case where the high-speed switch 23 is turned on at the timing later than the timing at which the high-speed circuit breaker interruption unit 21 starts the opening operation, it is desirable to turn the high-speed switch 23 on before the high-speed circuit breaker interruption unit 21 finishes the opening operation.

Meanwhile, the low-speed circuit breaker 30a includes the low-speed circuit breaker interruption unit 31, a current limiting element 32, a capacitor 33, and a reactor 34.

In the low-speed circuit breaker 30a, a resonant circuit is configured from the capacitor 33 and the reactor 34, which are connected in series, and by the current limiting element 32 connected in parallel with the capacitor 33 and the reactor 34. The resonant circuit and the low-speed circuit breaker interruption unit 31 are connected in parallel. In the low-speed circuit breaker 30a, a period of time from when the low-speed circuit breaker interruption unit 31 is opened to when a current increases and oscillates, thereby forming a current zero point, i.e., the time required to interrupt the DC current, is in the order of several tens of milliseconds. However, the low-speed circuit breaker 30a does not need the charging device and the high-speed switch 23 for the capacitor 24, which are needed for the high-speed circuit breaker 20a described above. Thus, the low-speed circuit breaker 30a can have a simple configuration at reduced cost.

A direct current circuit breaker that is applied to self-commutated direct current power transmission is required to interrupt a DC current at a high speed, i.e., achieve a performance in which the DC current is interrupted within approximately 10 milliseconds of the occurrence of a fault. A forced arc-extinguishing direct current circuit breaker is capable of interrupting a DC current at a high speed, and it is thus capable of satisfying the interrupting speed requirement. However, if an attempt is made to achieve the required voltage-resisting performance by using only a forced arc-extinguishing direct current circuit breaker, then it is difficult for the existing high-voltage class mechanical circuit breakers to achieve this performance. Even if the required voltage-resisting performance can be achieved, a cost increase is unavoidable. Meanwhile, a self-excited vibration direct current circuit breaker forms a current zero point by using a current increase and an oscillation phenomenon. It is therefore difficult to interrupt the DC current at the high speed that is required for self-commutated direct current power transmission. Under the present circumstances, whether the self-excited vibration direct current circuit breaker can interrupt a DC current with a high peak value has not yet been established.

However, the direct current circuit breaker 10a according to the present embodiment is configured to include the high-speed circuit breaker 20a and the low-speed circuit breaker 30a. In the high-speed circuit breaker 20a, a forced arc-extinguishing circuit breaker is used, which is in the lower voltage class, i.e., it has a reduced voltage resistance. Consequently, the high-speed circuit breaker 20a is capable of operating at a high speed. Meanwhile, in the low-speed circuit breaker 30a, a self-excited vibration circuit breaker is used. Consequently, while at the same time as reducing the cost by reducing the number of high-voltage-class accessory devices to be used, the low-speed circuit breaker 30a can still interrupt a fault current that cannot be adequately interrupted by the high-speed circuit breaker 20a. Further, the low-speed circuit breaker interruption unit 31 is not required to operate at a high speed, and therefore it can be downsized. A current that needs to be interrupted by the low-speed circuit breaker interruption unit 31 of the low-speed circuit breaker 30a is significantly reduced by the current limiting element 32. Thus, even the low-speed circuit breaker interruption unit 31 is still capable of interrupting the current.

As described above, the direct current circuit breaker according to the present embodiment can be downsized in its entirety while at the same time satisfying the high-speed interruption requirement of the system.

In the present embodiment, the direct current circuit breaker 10a has been described in which the high-speed circuit breaker 20 in the direct current circuit breaker 10 described in the first or second embodiment is replaced with the high-speed circuit breaker 20a, which is a forced arc-extinguishing direct current circuit breaker, and the low-speed circuit breaker 30 in the direct current circuit breaker 10 described in the first or second embodiment is replaced with the low-speed circuit breaker 30a, which is a self-excited vibration direct current circuit breaker. However, the direct current circuit breaker 10a is not limited to having this configuration. In the direct current circuit breaker 10 described in the first or second embodiment, the high-speed circuit breaker 20 can be replaced with the high-speed circuit breaker 20a, which is a forced arc-extinguishing direct current circuit breaker, and the low-speed circuit breaker 30 is a direct current circuit breaker other than the self-excited vibration direct current circuit breaker. The high-speed circuit breaker 20 can be a direct current circuit breaker other than the forced arc-extinguishing direct current circuit breaker, and the low-speed circuit breaker 30 can be replaced with the low-speed circuit breaker 30a, which is a self-excited vibration direct current circuit breaker.

### Fourth embodiment

A direct current circuit breaker according to a fourth embodiment is described below. The configuration of the direct current circuit breaker according to the fourth embodiment is the same as the configuration of the direct current circuit breaker 10a according to the third embodiment illustrated in FIG. 4.

In the direct current circuit breaker 10a according to the present embodiment, the high-speed circuit breaker interruption unit 21 of the high-speed circuit breaker 20a in the direct current circuit breaker 10a according to the third embodiment is a vacuum circuit breaker. More specifically, in the direct current circuit breaker 10a according to the present embodiment, the high-speed circuit breaker interruption unit 21 of the high-speed circuit breaker 20a is a forced arc-extinguishing vacuum circuit breaker.

A forced arc-extinguishing circuit breaker superimposes a resonant current made by a capacitor and a reactor on a DC current, thereby forming a current zero point. The current, which needs to be interrupted by the high-speed circuit breaker 20a using this forced arc-extinguishing circuit breaker, has a steepness that is determined by the capacitance value of the capacitor 24 and the inductance value of the reactor 25. If an attempt at downsizing the capacitor 24 and the reactor 25 is made, the frequency of the resonant current generated by the resonant circuit formed by the capacitor 24 and the reactor 25 becomes higher, and thus the steepness of the current to be interrupted becomes greater. Consequently, a vacuum circuit breaker is used as the high-speed circuit breaker interruption unit 21. This makes it possible to interrupt a current that has a greater steepness. Consequently, it is possible to downsize the capacitor 24 and the reactor 25 in the high-speed circuit breaker 20a, i.e., to reduce the capacitance value and the inductance value.

Meanwhile, it is possible to use a gas circuit breaker in the self-excited vibration low-speed circuit breaker 30a. Because the low-speed circuit breaker 30a is required to have a high voltage resistance, a gas circuit breaker with higher voltage-resisting performance than that of the vacuum circuit breaker is used as the low-speed circuit breaker interruption unit 31 of the low-speed circuit breaker 30a. The low-speed circuit breaker 30a can thereby achieve a high voltage resistance more easily.

As described above, in the direct current circuit breaker according to the present embodiment, the vacuum circuit breaker is used as the high-speed circuit breaker interruption unit 21 of the high-speed circuit breaker 20a and the gas circuit breaker is used as the low-speed circuit breaker interruption unit 31 of the low-speed circuit breaker 30a. With this configuration, the direct current circuit breaker can be downsized, and its operating duty can be lessened.

In the present embodiment, the direct current circuit breaker 10a that has been described is one in which the high-speed circuit breaker interruption unit 21 of the high-speed circuit breaker 20a is a vacuum circuit breaker and the low-speed circuit breaker interruption unit 31 of the low-speed circuit breaker 30a is a gas circuit breaker. However, the direct current circuit breaker 10a is not limited to this configuration. In the direct current circuit breaker 10a, the high-speed circuit breaker interruption unit 21 of the high-speed circuit breaker 20a can be a vacuum circuit breaker and the low-speed circuit breaker interruption unit 31 of the low-speed circuit breaker 30a can be another type of circuit breaker other than the gas circuit breaker. The high-speed circuit breaker interruption unit 21 of the high-speed circuit breaker 20a can be another type of circuit breaker other than the vacuum circuit breaker and the low-speed circuit breaker interruption unit 31 of the low-speed circuit breaker 30a can be a gas circuit breaker.

Fifth embodiment

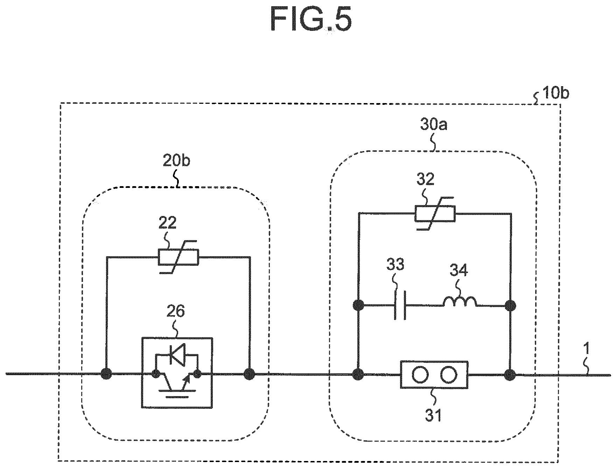

FIG. 5 is a diagram illustrating an example configuration of a direct current circuit breaker according to a fifth embodiment. In a direct current circuit breaker 10b according to the present embodiment, the high-speed circuit breaker 20a in the direct current circuit breaker 10a according to the third or fourth embodiment is replaced with a high-speed circuit breaker 20b.

In the high-speed circuit breaker 20b, the high-speed circuit breaker interruption unit 21 of the high-speed circuit breaker 20 in the direct current circuit breaker 10 according to the first embodiment is replaced with a high-speed circuit breaker interruption unit 26. The low-speed circuit breaker 30a is the same as the low-speed circuit breaker 30a in the direct current circuit breaker 10a described in the third or fourth embodiment. Descriptions thereof are therefore omitted.

The high-speed circuit breaker interruption unit 26 is a semiconductor circuit breaker formed by combining semiconductor switches, or it is a semiconductor circuit breaker formed by combining semiconductor switches with mechanical switches. The semiconductor switches are self-arc-extinguishing semiconductor elements. It is possible to use IGBTs as the self-arc-extinguishing semiconductor elements. However, the self-arc-extinguishing semiconductor element is not limited to being an IGBT.

The semiconductor circuit breaker using the self-arc-extinguishing semiconductor elements is capable of interrupting a DC current. However, the actual self-arc-extinguishing semiconductor elements are in the voltage class of several kilovolts. Therefore, if a direct current circuit breaker used in a direct current power transmission system is constructed of only a semiconductor circuit breaker, it is necessary to connect several hundreds of self-arc-extinguishing semiconductor elements in series. This results in a problem of a cost increase and an increase in switching loss.

Meanwhile, the direct current circuit breaker 10b according to the present embodiment is configured to interrupt a DC current flowing through the direct current line 1 with the high-speed circuit breaker 20b and the low-speed circuit breaker 30a; therefore, even when the semiconductor circuit breaker is used as the high-speed circuit breaker 20b, it is still possible that the semiconductor circuit breaker is in a voltage class lower than the rated voltage of the direct current power transmission system. Consequently, the number of self-arc-extinguishing semiconductor elements to be used can be reduced. It is therefore possible to reduce the cost of the high-speed circuit breaker interruption unit 26 that is the semiconductor circuit breaker and to reduce the switching loss in the high-speed circuit breaker interruption unit 26.

Because a self-excited vibration circuit breaker is used in the low-speed circuit breaker 30a, it is possible to downsize the device and reduce the device cost as mentioned above.

As described above, the direct current circuit breaker according to the present embodiment employs a semiconductor circuit breaker in the high-speed circuit breaker 20b, and it uses a self-excited vibration direct current circuit breaker in the low-speed circuit breaker 30a. Thus, while satisfying the high-speed interruption requirement of the system, the direct current circuit breaker can at the same time be downsized in its entirety.

The configurations described in the above embodiments are only examples of the present invention. The configurations can be combined with other well-known techniques, and a part of each configuration can be omitted or modified without departing from the scope of the present invention.

### Reference Signs List

1 direct current line, 10, 10a, 10b direct current circuit breaker, 20, 20a, 20b high-speed circuit breaker, 21, 26 high-speed circuit breaker interruption unit, 22, 32 current limiting element, 23 high-speed switch, 24, 33 capacitor, 25, 34 reactor, 30, 30a low-speed circuit breaker, 31 low-speed circuit breaker interruption unit.

## Claims

1. A direct current circuit breaker (10) used in a self-commutated direct current power transmission system, the direct current circuit breaker (10) comprising a high-speed circuit breaker (20) and a low-speed circuit breaker (30) that are connected in series, wherein
the high-speed circuit breaker (20) includes
a high-speed circuit breaker interruption unit (21) to interrupt, when a fault has occurred on a direct current line (1), a DC current flowing through the direct current line (1), and
a current limiting element (22) connected in parallel with the high-speed circuit breaker interruption unit (21),
the low-speed circuit breaker (30) includes
a low-speed circuit breaker interruption unit (31) to interrupt, when a fault has occurred on the direct current line (1), the DC current flowing through the direct current line (1),
a time period required for the high-speed circuit breaker interruption unit (21) to interrupt the DC current is shorter than a time period required for the low-speed circuit breaker interruption unit (31) to interrupt the DC current, and
the low-speed circuit breaker interruption unit (31) completes interruption of the DC current before a voltage applied to the current limiting element (22) becomes lower than a minimum voltage allowable for the system, wherein
an impedance of the current limiting element (22) is set at a value that enables, after the high-speed circuit breaker interruption unit (21) has interrupted the DC current, a voltage applied to the current limiting element (22) to be maintained at the minimum voltage or greater than the minimum voltage needed for the system to continue operating.

2. The direct current circuit breaker (10a) according to claim 1, wherein
the high-speed circuit breaker (20a) is a forced arc-extinguishing direct current circuit breaker.

3. The direct current circuit breaker (10a) according to claim 1, wherein
the low-speed circuit breaker (30a) is a self-excited vibration direct current circuit breaker.

4. The direct current circuit breaker (10a) according to claim 2, wherein
the high-speed circuit breaker (20a) interruption unit is a vacuum circuit breaker.

5. The direct current circuit breaker (10a) according to claim 3, wherein the low-speed circuit breaker interruption unit (31) is a gas circuit breaker.

6. The direct current circuit breaker (10b) according to claim 1, wherein
the high-speed circuit breaker (20b) is a semiconductor circuit breaker configured by combining self-arc-extinguishing semiconductor elements.

7. The direct current circuit breaker (10b) according to claim 1, wherein
the high-speed circuit breaker (20b) is a semiconductor circuit breaker configured by combining self-arc-extinguishing semiconductor elements with a mechanical switch.

## Patentansprüche

1. Gleichstromschutzschalter (10), der in einem selbstgeschalteten Gleichstromenergieübertragungssystem verwendet wird, wobei der Gleichstromschutzschalter (10) einen schnell schaltenden Schutzschalter (20) und einen langsam schaltenden Schutzschalter (30) umfasst, die in Reihe geschaltet sind, wobei
der schnell schaltende Schutzschalter (20) enthält
eine schnelle Schutzschalterunterbrechungseinheit (21), um, wenn ein Fehler in einer Gleichstromleitung (1) aufgetreten ist, einen Gleichstrom zu unterbrechen, der durch die Gleichstromleitung (1) fließt, und
ein Strombegrenzungselement (22), das mit der schnellen Schutzschalterunterbrechungseinheit (21) parallelgeschaltet ist,
wobei der langsam schaltende Schutzschalter (30) enthält
eine langsame Schutzschalterunterbrechungseinheit (31), um, wenn ein Fehler in einer Gleichstromleitung (1) aufgetreten ist, den Gleichstrom zu unterbrechen, der durch die Gleichstromleitung (1) fließt,
wobei ein Zeitraum, den die schnelle Schutzschalterunterbrechungseinheit (21) braucht, um den Gleichstrom zu unterbrechen, kürzer ist als ein Zeitraum, den die langsame Schutzschalterunterbrechungseinheit (31) braucht, um den Gleichstrom zu unterbrechen, und
wobei die langsame Schutzschalterunterbrechungseinheit (31) die Unterbrechung des Gleichstroms abschließt, bevor eine an das Strombegrenzungselement (22) angelegte Spannung niedriger wird als eine für das System zulässige Mindestspannung, wobei
eine Impedanz des Strombegrenzungselements (22) bei einem Wert angesetzt ist, der es ermöglicht, dass, nachdem die schnelle Schutzschalterunterbrechungseinheit (21) den Gleichstrom unterbrochen hat, eine an das Strombegrenzungselement (22) angelegte Spannung auf der Mindestspannung oder über der Mindestspannung gehalten wird, die für das System nötig ist, um weiterhin zu arbeiten.

2. Gleichstromschutzschalter (10a) nach Anspruch 1, wobei
der schnell schaltende Schutzschalter (20a) ein Gleichstromschutzschalter mit Zwangslichtbogenlöschung ist.

3. Gleichstromschutzschalter (10a) nach Anspruch 1, wobei
der langsam schaltende Schutzschalter (30a) ein Gleichstromschutzschalter mit selbsterregter Schwingung ist.

4. Gleichstromschutzschalter (10a) nach Anspruch 2, wobei
die Unterbrechungseinheit des schnell schaltenden Schutzschalters (20a) ein Vakuumschutzschalter ist.

5. Gleichstromschutzschalter (10a) nach Anspruch 3, wobei die langsame Schutzschalterunterbrechungseinheit (31) ein Gasschutzschalter ist.

6. Gleichstromschutzschalter (10b) nach Anspruch 1, wobei
der schnell schaltende Schutzschalter (20b) ein Halbleiterschutzschalter ist, der durch Kombinieren von selbstlichtbogenlöschenden Halbleiterelementen ausgebildet ist.

7. Gleichstromschutzschalter (10b) nach Anspruch 1, wobei
der schnell schaltende Schutzschalter (20b) ein Halbleiterschutzschalter ist, der durch Kombinieren von selbstlichtbogenlöschenden Halbleiterelementen mit einem mechanischen Schalter ausgebildet ist.

## Revendications

1. Disjoncteur à courant continu (10) utilisé dans un système de transmission de puissance de courant continu autocommuté, le disjoncteur à courant continu (10) comprenant un disjoncteur haute vitesse (20) et un disjoncteur basse vitesse (30) qui sont connectés en série, sachant que
le disjoncteur haute vitesse (20) inclut
une unité d'interruption de disjoncteur haute vitesse (21) pour interrompre, lorsqu'un défaut est survenu sur une ligne de courant continu (1), un courant CC passant par la ligne de courant continu (1), et
un élément de limitation de courant (22) connecté en parallèle à l'unité d'interruption de disjoncteur haute vitesse (21),
le disjoncteur basse vitesse (30) inclut
une unité d'interruption de disjoncteur basse vitesse (31) pour interrompre, lorsqu'un défaut est survenu sur la ligne de courant continu (1), le courant CC passant par la ligne de courant continu (1),
une période de temps nécessaire à l'unité d'interruption de disjoncteur haute vitesse (21) pour interrompre le courant CC est plus courte qu'une période de temps nécessaire à l'unité d'interruption de disjoncteur basse vitesse (31) pour interrompre le courant CC, et
l'unité d'interruption de disjoncteur basse vitesse (31) achève l'interruption du courant CC avant qu'une tension appliquée à l'élément de limitation de courant (22) devienne inférieure à une tension minimale admissible pour le système, sachant que
une impédance de l'élément de limitation de courant (22) est réglée à une valeur qui permet, après que l'unité d'interruption de disjoncteur haute vitesse (21) a interrompu le courant CC, à une tension appliquée à l'élément de limitation de courant (22) d'être maintenue à la tension minimale ou supérieure à la tension minimale nécessaire au système pour continuer de fonctionner.

2. Le disjoncteur à courant continu (10a) selon la revendication 1, sachant que
le disjoncteur haute vitesse (20a) est un disjoncteur à courant continu à extinction d'arc forcée.

3. Le disjoncteur à courant continu (10a) selon la revendication 1, sachant que
le disjoncteur basse vitesse (30a) est un disjoncteur à courant continu à vibration autoexcitée.

4. Le disjoncteur à courant continu (10a) selon la revendication 2, sachant que
l'unité d'interruption de disjoncteur haute vitesse (20a) est un disjoncteur à vide.

5. Le disjoncteur à courant continu (10a) selon la revendication 3, sachant que l'unité d'interruption de disjoncteur basse vitesse (31) est un disjoncteur à gaz.

6. Le disjoncteur à courant continu (10b) selon la revendication 1, sachant que
le disjoncteur haute vitesse (20b) est un disjoncteur à semiconducteur configuré en combinant des éléments semiconducteurs à autoextinction d'arc.

7. Le disjoncteur à courant continu (10b) selon la revendication 1, sachant que
le disjoncteur haute vitesse (20b) est un disjoncteur à semiconducteur configuré en combinant des éléments semiconducteurs à autoextinction d'arc avec un commutateur mécanique.
